# EUROPÄISCHE PATENTSCHRIFT

(11) **EP 3 720 749 B1**
(45) Veröffentlichungstag und Bekanntmachung des Hinweises auf die Patenterteilung: **01.03.2023**
(21) Anmeldenummer: 18811740.2
(22) Anmeldetag: 20.11.2018
(51) Int. Cl.: B60W 30/095, B60W 30/10, B60W 50/14

(54) **VERFAHREN ZUM BETREIBEN EINES KRAFTFAHRZEUGS UND KRAFTFAHRZEUG MIT EINEM ENGSTELLENASSISTENTEN**
METHOD FOR OPERATING A MOTOR VEHICLE AND MOTOR VEHICLE HAVING A NARROW PASSAGE ASSISTANT
PROCÉDÉ D'UTILISATION D'UN VÉHICULE AUTOMOBILE ET VÉHICULE AUTOMOBILE AYANT UN ASSISTANT D'ÉTRANGLEMENT

(30) Priorität: 05.12.2017 DE 102017221932
(43) Veröffentlichungstag der Anmeldung: 14.10.2020
(73) Patentinhaber: Volkswagen Aktiengesellschaft, 38440 Wolfsburg (DE)
(72) Erfinder: SEELAND, Jana, 38448 Wolfsburg (DE); WAPPLER, Stefan, 10717 Berlin (DE)
(86) Internationale Anmeldenummer: PCT/EP2018/081863
(87) Internationale Veröffentlichungsnummer: WO 2019/110289

(56) Entgegenhaltungen:
- DE-A1-102005 052 634
- DE-A1-102007 027 756
- DE-A1-102010 061 829
- DE-A1-102011 077 388
- DE-A1-102017 109 397
- US-B1- 8 880 272

## Beschreibung

Die Erfindung betrifft ein Verfahren zum Betreiben eines Kraftfahrzeugs der im Oberbegriff des Patentanspruchs 1 angegebenen Art sowie ein Kraftfahrzeug mit einem Engstellenassistenten.

Es ist an sich bekannt, in Kraftfahrzeugen verschiedenste Fahrerassistenzsysteme bereitzustellen, mittels welchen Fahrer bei der Durchführung der Fahraufgabe unterstützt werden können. So zeigt die DE 10 2005 052 634 A1 ein Verfahren und eine Vorrichtung zur Fahrerunterstützung vor und/oder bei Durchfahren einer Engstelle. Dabei ist es vorgesehen, eine Durchfahrtsbreite zwischen zwei Begrenzungen einer Engstelle zu ermitteln und dem Fahrer unterstützende Maßnahmen während und/oder vor der Durchfahrt der Engstelle auszugeben. Unter anderem ist es dabei vorgesehen, zu ermitteln, ob der Fahrer die Engstelle überhaupt passieren kann. Sollte dies nicht möglich sein, so wird der Fahrer entsprechend gewarnt. Falls hingegen ermittelt wird, dass der Fahrer mit seinem Kraftfahrzeug die Engstelle passieren, also durchfahren kann, wird er auch entsprechend darüber informiert. Diese Druckschrift wurde zur Formulierung des Oberbegriffs von Patentanspruch 1 herangezogen.

Die DE 10 2008 043 755 A1 beschreibt ein Verfahren zur Unterstützung eines Fahrers eines Fahrzeugs. Dabei ist es vorgesehen, Gefahren, Verkehrszeichen oder auch Blitzeranlagen zu erkennen. Zudem wird ein aktuelles Fahrverhalten erfasst. Sollte das Fahrverhalten nicht zu den erkannten Gefahren, Verkehrszeichen oder Blitzeranlagen passen, so wird ein Fahrer darüber in Kenntnis gesetzt.

Die DE 10 2016 205 141 A1 beschreibt ein Verfahren zum Bestimmen einer Fahrerintension bei einem Fahrer eines Fahrzeugs. Unterschiedlichste Umgebungsbedingungen werden dafür erfasst, beispielsweise auch Fahrbahnverengungen beziehungsweise Straßenverengungen. In Abhängigkeit von den erfassten Umgebungsbedingungen wird die Fahrerintention abgeschätzt.

Aus der DE 10 2011 077 388 A1 ist ein Verfahren bekannt, das in einem Fahrerassistenzsystem eines Fahrzeugs ausgeführt wird. Bei dem Verfahren werden Umfelddaten, die ein Umfeld des Fahrzeugs repräsentieren, durch eine Umfeldsensorik erfasst. Anschließend wird basierend auf den Umfelddaten ein kollisionsfrei fahrbarer Fahrbereich berechnet und ein Ausgabesignal zur Ausgabe des berechneten Fahrbereichs auf einer Mensch-Maschine-Schnittstelle des Fahrzeugs bereitgestellt.

Aus der DE 10 2010 061 829 A1 sind ein Verfahren und eine Abstandskontrolleinrichtung zur Vermeidung von Kollisionen eines Fahrzeugs in einer Fahrsituation mit geringem Seitenabstand zu einem Kollisionskörper bekannt, wobei Daten von Nahbereichssensoren und/oder Daten eines Fahrzeugkommunikationsmoduls genutzt werden, wobei ein Warnsignal ausgegeben wird und/oder ein Eingriff in das Fahrzeugbremssystem und/oder das Fahrzeuglenksystem durchgeführt wird, wenn ein geschwindigkeitsabhängiger Mindestabstand des Fahrzeugs zu einem Kollisionskörper unterschritten wird oder die vorausberechnete Fahrtrajektorie eines oder mehrerer Fahrzeuge auf eine bevorstehende Kollision schließen läßt, wobei der Eingriff in das Fahrzeugbremssystem derart durchgeführt wird, dass sich die Fahrtrichtung des Fahrzeugs kontrolliert verändert.

Aus der US 8,880,272 B1 sind ein Verfahren und eine Vorrichtung zum Steuern des Betriebs eines autonomen Fahrzeugs bekannt. Dabei kann das autonome Fahrzeug die Trajektorien von anderen Fahrzeugen auf einer Führungsbahn verfolgen. Basierend auf den Trajektorien der anderen Fahrzeuge kann das autonome Fahrzeug eine repräsentative Trajektorie erzeugen. Danach kann das autonome Fahrzeug entweder seine Geschwindigkeit oder seine Richtung basierend auf der repräsentativen Trajektorie verändern.

Die DE 10 2017 109 397 A1 beschreibt ein Fahrzeugsystem, bei dem zunächst bestimmt wird, ob ein autonomes Trägerfahrzeug ein Umgebungshindernis überqueren kann und, falls das autonome Trägerfahrzeug das Umgebungshindernis überqueren kann, ein aktives Federungssystem gemäß dem Umgebungshindernis gesteuert wird und das autonome Trägerfahrzeug gesteuert wird, um das Umgebungshindernis zu überqueren.

Die DE 10 2007 027 756 A1 betrifft ein Verfahren zur Unterstützung eines Fahrers eines Kraftfahrzeugs bei der Durchfahrt des Kraftfahrzeugs durch eine Engstelle. Zur Bereitstellung eines kostengünstigen Verfahrens wird erfindungsgemäß vorgeschlagen, dass dem Fahrer des Fahrzeugs der von dem Fahrzeug voraussichtlich demnächst zurückgelegte Fahrweg angezeigt wird und dass die Breite des angezeigten Fahrwegs der Breite des konkreten Fahrzeugs entspricht. Wird die Länge des angezeigten Fahrwegs geschwindigkeitsabhängig realisiert, so entsteht als weiterer Vorteil eine Information über den Abstand zum Vorderfahrzeug.

Es ist die Aufgabe der vorliegenden Erfindung, eine Lösung bereitzustellen, mittels welcher Fahrer von Kraftfahrzeugen besonders gut beim Durchfahren von Engstellen unterstützt werden können.

Diese Aufgabe wird durch ein Verfahren zum Betreiben eines Kraftfahrzeugs sowie durch ein Kraftfahrzeug mit einem Engstellenassistenten mit den Merkmalen der unabhängigen Patentansprüche gelöst. Vorteilhafte Ausgestaltungen der Erfindung sind in den abhängigen Ansprüchen angegeben.

Bei dem erfindungsgemäßen Verfahren zum Betreiben eines Kraftfahrzeugs wird mittels eines Engstellenassistenten des Kraftfahrzeugs anhand von Abmessungen eine Engstelle charakterisierenden Daten überprüft, ob zumindest eine Trajektorie zum kollisionsfreien Durchfahren der Engstelle mit dem Kraftfahrzeug ermittelbar ist. Falls keine Trajektorie zum kollisionsfreien Durchfahren der Engstelle ermittelbar ist, wird eine Warnmeldung ausgegeben. Falls zumindest eine Trajektorie zum kollisionsfreien Durchfahren der Engstelle ermittelt worden ist, wird signalisiert, dass die Engstelle passierbar ist. Das erfindungsgemäße Verfahren zeichnet sich dadurch aus, dass entsprechend der ermittelten Trajektorie ein Soll-Fahrschlauch mittels einer Anzeigeeinrichtung des Kraftfahrzeugs angezeigt wird, wobei, solange das Kraftfahrzeug innerhalb des Soll-Fahrschlauchs fährt, die Engstelle kollisionsfrei durchfahrbar ist.

Vorzugsweise ermittelt der Engstellenassistent auf Basis einer fahrzeugseitigen Sensorik und/oder unter Zuhilfenahme einer Sensorik anderer Verkehrsteilnehmer und/oder Infrastruktureinrichtungen zumindest eine mögliche Bahn beziehungsweise Trajektorie zum kollisionsfreien Durchfahren der Engstelle. Stellt sich heraus, dass die Engstelle passierbar ist, so wird dies dem Fahrer vorzugsweise auch noch durch ein entsprechendes Symbol, zum Beispiel in grün, angezeigt. Ist nicht klar, ob die Engstelle passierbar ist, so kann dies dem Fahrer beispielsweise durch ein entsprechendes Symbol, zum Beispiel in gelb, angezeigt werden. Stellt sich hingegen heraus, dass die Engstelle von dem Kraftfahrzeug nicht passierbar ist, der Fahrer mit seinem Kraftfahrzeug die Engstelle also nicht kollisionsfrei durchfahren kann, so wird dies dem Fahrer durch ein entsprechendes Symbol, zum Beispiel in rot, dargestellt. Dadurch, dass es erfindungsgemäß vorgesehen ist, entsprechend der ermittelten Trajektorie den Soll-Fahrschlauch mittels der Anzeigeeinrichtung des Kraftfahrzeugs anzuzeigen, kann der Fahrer des Kraftfahrzeugs auf besonders einfache Weise abschätzen, wie kritisch das Durchfahren der Engstelle überhaupt ist. Zudem erhält er sehr gute optische Anhaltspunkte, wie er sein Kraftfahrzeug bewegen muss, um die Engstelle problemlos, insbesondere kollisionsfrei, zu passieren.

Bei der Engstelle kann es sich sowohl um eine enge Durchfahrt mit Hindernissen, einseitig oder beidseitig des Kraftfahrzeugs, als auch um eine einfach nur besonders schmale Fahrspur oder auch um eine Kombination von beidem handeln. Grundsätzlich kann es sich bei der Engstelle um beliebige Stellen beziehungsweise Bereiche handeln, die ein Fahrer des Kraftfahrzeugs durchfahren beziehungsweise passieren möchte.

Die erwähnten Warnhinweise, Signale und insbesondere der Soll-Fahrschlauch können beispielsweise mittels eines herkömmlichen Displays im Innenraum des Kraftfahrzeugs angezeigt werden. Auch ist es möglich, dass das Kraftfahrzeug beispielsweise über ein Augmented-Reality-System oder über mehrere Augmented-Reality-Systeme verfügt, mittels welchem bzw. welchen diese Informationen eingeblendet werden können. Zum Beispiel ist es denkbar, dass der Soll-Fahrschlauch oder auch die anderen genannten Informationen als augmentierte Realität mittels eines fahrzeugseitigen Head-up-Displays eingeblendet werden. Andere Anzeige- beziehungsweise Informationsmöglichkeiten sind auch denkbar.

Mittels des erfindungsgemäßen Verfahrens ist es auf besonders einfache Weise möglich, einem Fahrer eines Kraftfahrzeugs bei einer Entscheidung zu unterstützen, ob er eine Engstelle durchfahren sollte oder nicht. Zudem ist es aufgrund des eingeblendeten Soll-Fahrschlauchs auch während der Durchfahrt der Engstelle möglich, den Fahrer bestmöglich zu unterstützen. Insgesamt wird durch das erfindungsgemäße Verfahren eine besonders effektive und komfortable Lösung für einen Fahrer eines Kraftfahrzeugs bereitgestellt, die ihm dabei hilft, Engstellen kollisionsfrei zu durchfahren und abzuschätzen, ob er die Engstelle überhaupt durchfahren sollte.

Eine vorteilhafte Ausführungsform der Erfindung sieht vor, dass ein Lenkwinkel des Kraftfahrzeugs erfasst und ein dem Lenkwinkel entsprechender Ist-Fahrschlauch mittels der Anzeigeeinrichtung angezeigt wird. Es ist also vorzugsweise vorgesehen, dass sowohl der Soll-Fahrschlauch als auch der dem gerade eingeschlagenen Lenkwinkel entsprechende Ist-Fahrschlauch mittels der Anzeigeeinrichtung angezeigt wird. Durch die überlagerte Darstellung des Soll-Fahrschlauchs und des Ist-Fahrschlauchs kann der Fahrer des Kraftfahrzeugs auf besonders einfache Weise erkennen, ob und inwiefern er mit dem gerade eingeschlagenen Lenkwinkel die grundsätzlich auch passierbare Engstelle überhaupt passieren kann. Zudem kann der eingeschlagene Lenkwinkel auch dazu genutzt werden, zu bestimmen, ob die Engstelle überhaupt passierbar ist. Durch die permanente Anpassung des angezeigten Ist-Fahrschlauchs an den gerade gewählten Lenkwinkel des Kraftfahrzeugs kann der Fahrer des Kraftfahrzeugs auf einfache Weise auch während des Passierens der Engstelle erkennen, wie er lenkend eingreifen muss, um die Engstelle problemlos zu durchfahren.

Eine weitere vorteilhafte Ausführungsform der Erfindung sieht vor, dass mittels einer Kommunikationseinrichtung des Kraftfahrzeugs die Engstelle betreffende Daten an eine fahrzeugexterne Servereinrichtung und/oder an zumindest ein weiteres Kraftfahrzeug übertragen werden. Die mittels des Kraftfahrzeugs gesammelten Daten und Erkenntnisse bezüglich der Engstelle können so auf einfache Weise anderen Fahrern von Kraftfahrzeugen bereitgestellt werden. Dies kann dadurch erfolgen, dass das Kraftfahrzeug mittels seiner Kommunikationseinrichtung die Engstelle betreffende Daten an die besagte fahrzeugexterne Servereinrichtung übermittelt. Auf diese können dann andere Kraftfahrzeuge wiederum zugreifen, um an die bereitgestellten Informationen zu gelangen. Alternativ oder zusätzlich ist es auch möglich, dass das Kraftfahrzeug über eine Car-to-Car-Kommunikation die Daten, welche die Engstelle betreffen, an andere Kraftfahrzeuge überträgt. In beiden Fällen profitieren die Fahrer anderer Kraftfahrzeuge von den Informationen, Daten und Erkenntnissen, die das Kraftfahrzeug vor und/oder während dem Durchfahren der Engstelle gewonnen hat.

Gemäß einer weiteren vorteilhaften Ausführungsform der Erfindung ist es vorgesehen, dass nach einem kollisionsfreien Durchfahren der Engstelle zumindest eine der folgenden Informationen an die fahrzeugexterne Servereinrichtung und/oder an das zumindest eine weitere Kraftfahrzeug übertragen wird: eine Position der Engstelle, Abmessungen der Engstelle, Abmessungen des Kraftfahrzeugs, und/oder eine Geschwindigkeit des Kraftfahrzeugs beim Durchfahren der Engstelle.

Beispielsweise kann die fahrzeugexterne Servereinrichtung eine Karte pflegen und permanent auf Basis der oben genannten Daten aktualisieren, wobei weitere Kraftfahrzeuge wiederum Zugriff auf diese Daten beziehungsweise die Karte haben. Damit können Informationen über die Engstelle an eine Vielzahl von Kraftfahrzeugen übertragen werden, wobei diesbezüglich Informationen auch permanent durch die Kraftfahrzeuge aktualisiert werden können. Nach der Übertragung von Engstelleninformationen an verschiedenste Kraftfahrzeuge kann überprüft werden, ob ein jeweiliges Kraftfahrzeug beispielsweise aufgrund seiner Abmessungen die Engstelle problemlos passieren kann oder nicht. Dadurch können fahrzeugspezifisch Falsch-Alarme vermieden werden. Nach dem erfolgreichen Durchfahren der Engstelle überträgt also das Kraftfahrzeug die während des Durchfahrens der Engstelle erhobenen Daten. Das kann zurückliegenden und entgegenkommenden Kraftfahrzeugen helfen, zu entscheiden, ob sie die Engstelle passieren können. Dies kann zusätzlich oder alternativ zur Übertragung an die fahrzeugexterne Servereinrichtung auch über eine direkte Car-to-Car-Kommunikation erfolgen. In beiden Fällen, sei es über die Servereinrichtung oder über eine unmittelbare Car-to-Car-Kommunikation, können weitere Fahrer beispielsweise gewarnt werden und sich auf die Engstelle einstellen. Insbesondere die Geschwindigkeitsinformationen des Kraftfahrzeugs beim Durchfahren der Engstelle können sehr hilfreich sein. Passieren beispielsweise genügend Kraftfahrzeuge eine bestimmte Engstelle mit sehr geringer Geschwindigkeit, so kann diese Engstelle als kritisch gekennzeichnet werden. Passieren hingegen sehr viele Kraftfahrzeuge eine bestimmte Engstelle mit höherer Geschwindigkeit, so kann diese als unkritisch, beispielsweise auf der fahrzeugexternen Servereinrichtung, gespeichert werden. Zudem ist es beispielsweise möglich, dass bestimmte Engstellen nicht mehr als solche gespeichert und gekennzeichnet werden, wenn mehrere Kraftfahrzeuge den Ort der Engstelle passieren, ohne dass dieser Ort als Engstelle der fahrzeugexternen Servereinrichtung oder den anderen Kraftfahrzeugen gemeldet wird. In dem Kraftfahrzeug und auch in anderen Kraftfahrzeugen können die erkannten Engstellen und diesbezügliche Informationen beispielsweise wiederum fahrzeugseitiger Displays angezeigt werden.

Eine weitere vorteilhafte Ausführungsform der Erfindung sieht vor, dass, falls das Kraftfahrzeug vor der Engstelle oder bei einem Versuch die Engstelle zu durchfahren, ein Wendemanöver durchgeführt und die Engstelle nicht, insbesondere nicht vollständig, durchfahren hat, eine das Wendemanöver betreffende Information an die fahrzeugexterne Servereinrichtung und/oder an das zumindest eine weitere Kraftfahrzeug überträgt. So ist es beispielsweise mittels der fahrzeugexternen Servereinrichtung auf einfache Weise möglich, nicht oder nur schlecht passierbare Engstellen zu erkennen und beispielsweise in einer digitalen Karte zu vermerken, sobald entsprechende Informationen bezüglich solcher Wendemanöver eingegangen sind. In analoger Weise kann dies auch bei der Car-to-Car-Kommunikation erfolgen, beispielsweise indem die jeweiligen Kraftfahrzeuge Informationen über derartige Wendemanöver erhalten und in ihrem fahrzeugseitigen Kartenmaterial neue Engstellen eintragen und vermerken. Diese permanent aktualisierten Karten können beispielsweise ebenfalls über eine Car-to-Car-Kommunikation mit anderen Kraftfahrzeugen geteilt werden, sodass die Kraftfahrzeuge immer möglichst auf dem gleichen Stand sind.

Erfindungsgemäß ist vorgesehen, dass der Engstellenassistent anhand von bereitgestellten Kartendaten und/oder Schwarmdaten von anderen Kraftfahrzeugen ermittelt, ob das Kraftfahrzeug nach einem Durchfahren der Engstelle seine Fahrt unter Berücksichtigung wenigstens eines vorgegebenen Kriteriums, im Hinblick auf Abmessungen des Kraftfahrzeugs betreffend Bodenfreiheit und/oder Fahrzeughöhe, eine Bereifung des Kraftfahrzeugs und/oder einer Fahrbahnbeschaffenheit, nach der Engstelle fortsetzen kann. Denn mitunter ist es durchaus wichtig, bereits beim Manövrieren oder Durchfahren einer Engstelle zu wissen, wie es nach der Engstelle an sich weitergeht. Anhand der bereitgestellten Kartendaten und/oder der Schwarmdaten von anderen Kraftfahrzeugen wird dafür vorzugsweise ermittelt, ob das Kraftfahrzeug nach dem Durchfahren der Engstelle seine Fahrt überhaupt problemlos fortsetzen kann. Beispielsweise wäre es denkbar, dass nach der Engstelle das Ende einer Sackgasse auftaucht, keine Wendemöglichkeiten bestehen, besonders schlechte Fahrbahnbeschaffenheiten vorliegen und dergleichen. Der Engstellenassistent kann einen Fahrer des Kraftfahrzeugs davor bewahren, die gegebenenfalls nur knapp durchfahrbare Engstelle zu durchfahren, um dann feststellen zu müssen, dass der Fahrer sein Kraftfahrzeug nicht oder nur schlecht nach der Engstelle noch fortbewegen kann. Insbesondere werden bei diesem Vorgehen auch die Abmessungen des Kraftfahrzeugs berücksichtigt. Ferner ist es beispielsweise auch möglich, dass Informationen über eine aktuelle Bereifung des Kraftfahrzeugs mit Informationen bezüglich einer Fahrbahnoberfläche hinter der Engstelle abgeglichen werden. Beispielsweise könnte es sein, dass es sich bei dem Kraftfahrzeug um einen Sportwagen mit herkömmlicher Bereifung oder Sportbereifung handelt. Wird basierend auf den Kartendaten und/oder Schwarmdaten ermittelt, dass nach der Engstelle zum Beispiel eine Schotterpiste beginnt, so wäre es für den Sportwagen sehr ungünstig, mit seiner für die Schotterpiste eher ungeeigneten Bereifung die Fahrt nach der Engstelle fortzusetzen. In dem Fall wird der Engstellenassistent den Fahrer des Sportwagens darüber in Kenntnis setzen, dass er nach der Engstelle seine Fahrt nur schlecht oder nur eingeschränkt fortsetzen kann. Basierend auf dieser Information kann der Fahrer dann selbst entscheiden, ob er die Engstelle tatsächlich noch durchfahren möchte oder lieber eine Alternativroute wählt. Fahrer von Kraftfahrzeugen können dadurch davor bewahrt werden, unter Umständen ohnehin schon schwer passierbare Engstellen zu durchfahren, um dann festzustellen, dass es nach der Engstelle nur schlecht oder gar nicht weitergeht. Die gilt auch z.B. für Fahrzeuge mit geringer Bodenfreiheit in Bezug auf Rampen und/oder Schlaglöcher hinter Engstellen sowie für hohe Fahrzeuge in Bezug auf Höhenbegrenzungen nach der Engstelle.

Gemäß einer weiteren vorteilhaften Ausführungsform der Erfindung ist es vorgesehen, dass mittels einer Aktivierungseinrichtung der Engstellenassistent erst dann aktiviert oder eine Aktivierung des Engstellenassistenten vorgeschlagen wird, wenn anhand von bereitgestellten Kartendaten und/oder Schwarmdaten von anderen Kraftfahrzeugen festgestellt wird, dass das Kraftfahrzeug eine vorgegebene Entfernung zur Engstelle unterschritten hat. So kann sichergestellt werden, dass ein Fahrer des Kraftfahrzeugs rechtzeitig eine Unterstützung vom Engstellenassistenten erfährt, aber nicht unnötig früh mit Informationen über bevorstehende Engstellen abgelenkt wird.

Eine weitere vorteilhafte Ausführungsform der Erfindung sieht vor, dass mittels der Aktivierungseinrichtung eine Aktivierung wenigstens eines weiteren Assistenzsystems des Kraftfahrzeugs, insbesondere eines weiteren Fahrerassistenzsystems, in Abhängigkeit von den bereitgestellten Kartendaten und/oder Schwarmdaten situationsabhängig vorgeschlagen wird, wobei das vorgeschlagene Assistenzsystem aktiviert wird, sobald eine vorgegebene Bestätigungshandlung erfasst worden ist. Die Aktivierungseinrichtung kann also anhand von verschiedensten Informationen erkennen, welche Assistenzsysteme den Fahrer auf bestimmten Fahrbahnabschnitten am besten unterstützen könnten. Zum Beispiel kann die Aktivierungseinrichtung natürlich auch die Aktivierung des Engstellenassistenten vorschlagen, wenn erfasst wird, dass sich das Kraftfahrzeug wie in der bereits oben beschriebenen Weise der Engstelle hinreichend genähert hat, also eine bestimmte Entfernung zur Engstelle unterschritten hat. Der Fahrer kann dann vorzugsweise selbst entscheiden, ob er den vorgeschlagenen Engstellenassistenten auch aktiviert haben möchte. Die Bestätigungshandlung kann beispielsweise per Sprachsteuerung, per Tastenbedienung, per Gestenbedienung, blickrichtungsabhängig oder dergleichen erfolgen. Insbesondere ist es auch möglich, dass die Aktivierungseinrichtung verschiedenste Assistenzsysteme, insbesondere Fahrerassistenzsysteme, situationsabhängig vorschlagen kann, sodass der Fahrer des Kraftfahrzeugs bestmöglich beim Durchführen der Fahraufgabe unterstützt wird, ohne ihn mit verschiedenste Assistenzfunktionen unnötig zu überfrachten.

In weiterer vorteilhafter Ausgestaltung der Erfindung ist es vorgesehen, dass die Aktivierungseinrichtung jeweilige Bestätigungshandlungen und zugehörige Daten hinsichtlich jeweiliger Fahrsituationen und/oder jeweiliger Fahrer auswertet und basierend darauf die Aktivierung, insbesondere fahrerspezifisch, vorschlägt. Die Aktivierungseinrichtung ist also dazu in der Lage, mit der Zeit zu erkennen, an welchen Stellen jeweilige Fahrer jeweilige Assistenzsysteme aktiviert haben möchten und kann zukünftig darauf reagieren. Die Aktivierungseinrichtung kann sich merken, dass ein bestimmter Fahrer beispielsweise in bestimmten Situationen, beispielsweise zu bestimmten Uhrzeiten, auf bestimmten Strecken, an bestimmten Orten, bei bestimmten Geschwindigkeiten und dergleichen, eine Unterstützung von einem bestimmten Assistenzsystem haben möchte oder gerade eben nicht haben möchte. Die Aktivierungseinrichtung ist also selbstlernend und kann sich an bestimmte Präferenzen von verschiedenen Fahrern anpassen. Hat die Aktivierungseinrichtung gelernt, dass ein bestimmter Fahrer gerne eine ganz bestimmte Unterstützung unter bestimmten Bedingungen haben möchte, kann die Aktivierungseinrichtung beim Auftreten dieser Bedingungen vorschlagen, sich diese Präferenz des bestimmten Fahrers zu merken. Alternativ können die Präferenzen auch ohne Fahrerrückfrage automatisch gespeichert und beispielsweise für einen selbstlernenden Algorithmus verwendet werden. Gelangt das Kraftfahrzeug zukünftig in Situationen, die zu einer gespeicherten Präferenz passen, wird passend dazu entweder ein Aktivierungsvorschlag unterdrückt oder getätigt, je nachdem, was dann zur vorliegenden Situation gerade passt. Die im Laufe der Zeit gesammelten Präferenzen beziehungsweise Vorlieben unterschiedlicher Fahrer können fahrerspezifischen Benutzerkonten zugeordnet und beispielsweise komfortabel auf andere Kraftfahrzeuge übertragen werden. Zudem ist es auch möglich, dass mehrere Fahrer das gleiche Kraftfahrzeug nutzen, wobei die Aktivierungseinrichtung sich dann jeweils auf die betreffenden Fahrer einstellen kann. Die Bestätigungshandlungen in verschiedenen Situationen können zudem fahrerspezifisch gespeichert und zum Beispiel für statistische Auswertungen genutzt werden, insbesondere im Hinblick auf die Nutzung bestimmter Assistenzfunktionen, bestimmter Aktivierungsdauern, Fahrerprofile, bestimmte Vorlieben, Fahrerbonussysteme und dergleichen.

Zusätzlich oder ergänzend zur Kommunikation mit der Servereinrichtung und/oder ergänzend zu Car-to-Car-Kommunikationen ist es auch möglich, andere Verkehrsteilnehmer, insbesondere andere Kraftfahrzeuge, mit Informationen zu Engstellen zu versorgen. Beispielsweise könnte ein Smartphone eines Fahrers des Kraftfahrzeugs miteinbezogen werden, sodass über das Smartphone akustische, optische oder haptisch wahrnehmbare Warnsignale ausgegeben werden, je nach Kritikalität einer Situation vor oder während des Durchfahrens einer Engstelle. Zudem ist es beispielsweise auch möglich, dass das Kraftfahrzeug Sensordaten, insbesondere Kameradaten, an ein anderes Kraftfahrzeug überträgt, sodass das andere Kraftfahrzeug beispielsweise ein Videobild erhält, während das Kraftfahrzeug eine Engstelle passiert. Der Fahrer des anderen Kraftfahrzeugs, welches noch nicht an der Engstelle angelangt ist oder zumindest die Engstelle noch nicht durchfährt, erkennt und kann abschätzen, ob er die Engstelle überhaupt passieren möchte. Zudem ist es auch möglich, dass das Kraftfahrzeug optische Hinweise über Blinker oder externe Displays, beispielsweise auch über anzeigetaugliche Karosserieteile, ausgibt. Dies kann beispielsweise durch Farbänderungen, Pfeile, auch über Schweinwerfer des Kraftfahrzeugs und dergleichen erfolgen. Das Kraftfahrzeug kann darüber andere Verkehrsteilnehmer insbesondere optisch über eine Engstelle informieren, beispielsweise um Richtungsinformationen anderen Verkehrsteilnehmern zu suggerieren. Außenseitig erkennbare Anzeigeeinrichtungen des Kraftfahrzeugs können also dazu genutzt werden, beispielsweise andere Verkehrsteilnehmer mit Informationen zu Engstellen zu versorgen und beispielsweise auch Empfehlungen auszusprechen, ob die Engstelle passiert oder besser umfahren werden sollte. In dem Zusammenhang ist es auch denkbar, dass bei einer direkten Kommunikation zwischen den Kraftfahrzeugen Fahrer Punkte sammeln können, indem sie anderen Kraftfahrzeugen an bestimmten Stellen mit ihren Daten helfen, insbesondere an Engstellen. Fahrer, welche häufig anderen Verkehrsteilnehmer auf dieser Art helfen bzw. informieren können dann beispielsweise belohnt werden, zum Beispiel über bessere Versicherungsprämien und dergleichen. Ein Datenaustausch oder eine Hilfe allgemein zwischen unterschiedlichen Kraftfahrzeugen stellt somit eine Art sozialen Hilfsdienst dar, der zum Beispiel in ein soziales Ökosystem eingebunden werden kann.

Das erfindungsgemäße Kraftfahrzeug umfasst einen Engstellenassistenten, wobei das Kraftfahrzeug dazu eingerichtet ist, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des erfindungsgemäßen Kraftfahrzeugs und umgekehrt anzusehen, wobei das Kraftfahrzeug insbesondere auch Mittel zur Durchführung der Verfahrensschritte aufweist.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine stark schematisierte Darstellung eines Kraftfahrzeugs, welches unter anderem einen Engstellenassistenten aufweist, um einen Fahrer des Kraftfahrzeugs beim Durchfahren von Engstellen zu unterstützen; und
- Fig. 2: eine schematische Darstellung, in welcher eine Engstelle dargestellt ist, welche von dem in Fig. 1 gezeigten Kraftfahrzeug gerade durchfahren worden ist, wobei ein weiteres Kraftfahrzeug dargestellt ist, welches die Engstelle noch nicht passiert hat.

In den Figuren sind gleiche oder funktionsgleiche Elemente mit den gleichen Bezugszeichen versehen worden.

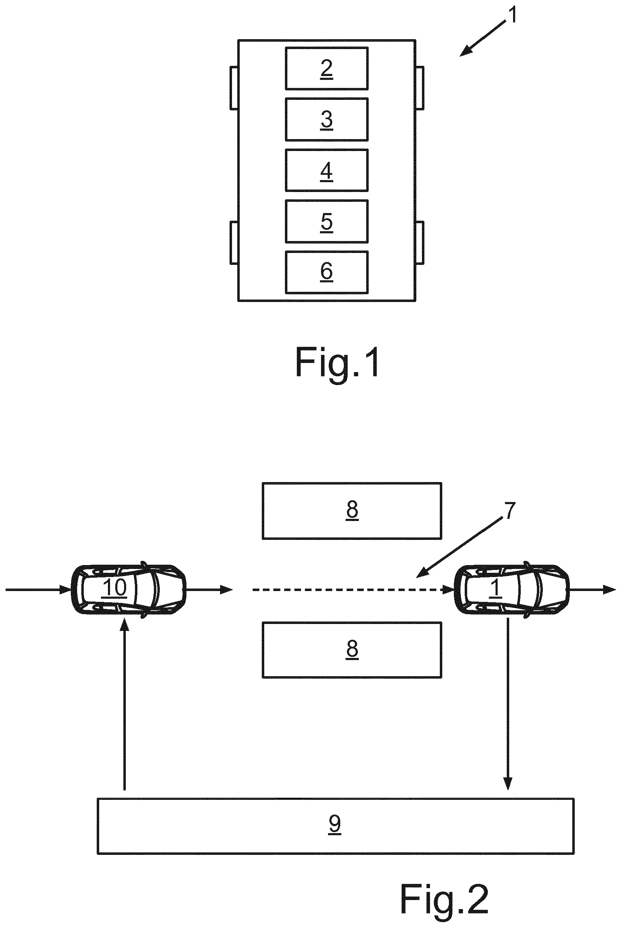

Ein Kraftfahrzeug 1 ist in einer stark schematisierten Darstellung in Fig. 1 gezeigt. Das Kraftfahrzeug 1 umfasst einen Engstellenassistenten 2, mehrere Sensoren 3, wobei der Einfachheit halber nur ein Sensor 3 dargestellt ist, eine Kommunikationseinrichtung 4, eine Aktivierungseinrichtung 5 und ein weiteres Assistenzsystem 6. Die Funktionsweise der verschiedenen Einrichtungen 2, 6 des Kraftfahrzeugs 1 werden anhand der Fig. 2 näher erläutert.

In Fig. 2 ist eine Engstelle 7, welche beidseitig durch jeweilige Hindernisse 8 eingerahmt ist, schematisch dargestellt. Das Kraftfahrzeug 1 hat gemäß der vorliegenden Darstellung die Engstelle 7 schon durchfahren beziehungsweise passiert. Ferner ist noch eine fahrzeugexterne Servereinrichtung 9 schematisch angedeutet, wobei zudem noch ein weiteres Kraftfahrzeug 10 gezeigt ist, welches die Engstelle 7 noch nicht durchfahren hat.

Noch vor dem Durchfahren der Engstelle 7 überprüft der Engstellenassistent 2 des Kraftfahrzeugs 1 anhand von Abmessungen der Engstelle 7 charakterisierende Daten, ob zumindest eine Trajektorie zum kollisionsfreien Durchfahren der Engstelle 7 mit dem Kraftfahrzeug 1 ermittelbar ist. Beispielsweise können die fahrzeugseitigen Sensoren 3 dafür genutzt werden, Abmessungen der Engstelle 7, insbesondere ihre Höhe, Länge und/oder Breite, zu ermitteln. Darüber hinaus können auch andere Daten herangezogen werden, beispielsweise Kartendaten, Schwarmdaten von anderen Kraftfahrzeugen und dergleichen, um möglichst viele und akkurate Informationen über die Engstelle 7 zu gewinnen. Falls gar keine Trajektorie zum kollisionsfreien Durchfahren der Engstelle 7 ermittelbar ist, wird eine Warnmeldung im Kraftfahrzeug 1 ausgegeben. Beispielsweise kann mittels eines Displays ein rotes Symbol ausgegeben werden. Natürlich ist es auch möglich, diese Warnmeldung noch akustisch und/oder auch haptisch zu untermalen. Sollte hingegen nicht ganz klar sein, ob die Engstelle provisionsfrei passiert werden kann, kann ebenfalls eine diesbezügliche Warnmeldung ausgegeben werden, zum Beispiel gepaart mit einem gelben Warnsymbol. Wird hingegen festgestellt, dass das Kraftfahrzeug 1 aufgrund seiner Abmessungen und aufgrund der Abmessungen der Engstelle 7 diese kollisionsfrei durchfahren kann, so wird dies ebenfalls innerhalb des Kraftfahrzeugs 1 signalisiert. Wurde eine bestimmte Trajektorie zum kollisionsfreien Durchfahren der Engstelle 7 ermittelt, so wird mittels einer fahrzeugseitigen Anzeigeeinrichtung ein Soll-Fahrschlauch angezeigt, welcher signalisiert, wie das Kraftfahrzeug 1 bewegt werden soll, damit es kollisionsfrei zwischen den Hindernissen 8 hindurchfahren und somit die Engstelle 7 passieren kann. Der Soll-Fahrschlauch kann beispielsweise mittels eines Head-up-Displays oder auch mittels anderer Anzeigen im Kraftfahrzeug 1 angezeigt werden. Je nach Breite des angezeigten Soll-Fahrschlauchs kann der Fahrer des Kraftfahrzeugs 1 auf einfache Weise erkennen, wie viel Platz er überhaupt zur Verfügung hat, um die Engstelle 7 zu passieren.

Zudem ist es auch möglich, dass ein Lenkwinkel des Kraftfahrzeugs 1 erfasst und an dem Lenkwinkel ein entsprechender Ist-Fahrschlauch angezeigt wird. Durch die überlagerte Darstellung von Soll-Fahrschlauch und Ist-Fahrschlauch in Abhängigkeit vom Lenkwinkel kann der Fahrer des Kraftfahrzeugs 1 besonders gut abschätzen, wie er lenkend eingreifen muss, um die an sich passierbare Engstelle 7 auch schadlos zu durchfahren.

Nachdem das Kraftfahrzeug 1 die Engstelle 7 passiert hat, sendet die Kommunikationseinrichtung 4 des Kraftfahrzeugs 1 die Engstellen 7 betreffende Daten an die fahrzeugexterne Servereinrichtung 9 und/oder über eine direkte Car-to-Car-Kommunikation an das weitere Kraftfahrzeug 10. Nach dem kollisionsfreien Durchfahren der Engstelle 7 werden insbesondere folgende Informationen an die fahrzeugexterne Servereinrichtung oder über die Car-to-Car-Kommunikation direkt an das weitere Kraftfahrzeug 10 übertragen: eine genaue Position der Engstelle 7, Abmessungen der Engstelle 7, insbesondere ihre Höhe, Länge und Breite, Abmessungen des Kraftfahrzeugs 1 und auch eine Geschwindigkeit beziehungsweise ein Geschwindigkeitsverlauf, gemäß welchem das Kraftfahrzeug 1 die Engstelle 7 durchfahren hat.

Zudem ist es auch noch möglich, dass das Kraftfahrzeug 1, sofern das Kraftfahrzeug 10 beispielsweise nah genug hinter dem Kraftfahrzeug 1 fahren sollte, diesem über außenseitig erkennbare optische Hinweise mitteilt, wie es um die Engstelle 7 bestellt ist. Beispielsweise können bestimmte Blinkmuster, Scheinwerfersignale und dergleichen mittels des Kraftfahrzeugs 1 angezeigt werden, um das weitere Kraftfahrzeug 10 oder auch andere entgegenkommende Kraftfahrzeuge über die Kritikalität der Engstelle 7 zu informieren.

Hier geht es insbesondere auch darum, dass Fahrzeuge auf entgegenkommende Fahrzeuge warten, die gerade die Engstelle 7 passieren. Es geht dabei nicht nur um die Kritikalität, sondern auch um Sensorinformationen bzw. Handlungsempfehlungen des Kraftfahrzeugs 1. Wenn z.B. das Kraftfahrzeug 1 erkennt, dass das weitere Kraftfahrzeug 10 sich einer Wand sehr dicht nähert und auf der anderen Seite ausreichend Platz wäre, dann könnte das Kraftfahrzeug 1 dem anderen Kraftfahrzeug 10 signalisieren, dass es sich zu der freien Seite bewegen soll.

Die fahrzeugexterne Servereinrichtung 9 pflegt basierend auf den mittels des Kraftfahrzeugs 1 übertragenen Informationen beziehungsweise Daten eine digitale Karte, die an das weitere Kraftfahrzeug 10 und auch an eine Vielzahl anderer Kraftfahrzeuge übertragen werden kann. Dadurch können ganz viele Engstellen 7 einer Vielzahl von Kraftfahrzeugen bekannt gemacht werden. Das Kraftfahrzeug 10 kann beispielsweise diese digitale Karte von der Servereinrichtung 9 abrufen, wobei das weitere Kraftfahrzeug 10 dann basierend auf diesen Informationen die Entscheidung treffen kann, ob unter Berücksichtigung der Abmessungen des Kraftfahrzeugs 10, ebenfalls ein problemloses Passieren der Engstelle 7 möglich ist oder nicht. Das Gleiche kann auch, wie gesagt, direkt über eine Car-to-Car-Kommunikation erfolgen. Dies kann zurückliegenden und entgegenkommenden Kraftfahrzeugen helfen, zu entscheiden, ob sie die Engstelle passieren können. Zudem ist es möglich, jeweilige Fahrer des weiteren Kraftfahrzeugs 10 und auch weitere hier nicht dargestellte Kraftfahrzeuge zu warnen, sodass diese sich auf die Engstelle 7 und auch auf andere Engstellen einstellen können. Darüber hinaus könnten jeweilige Fahrer auch in ihrem Profil oder ähnlichem angeben, welche vor welchen Engstellen bei der Routenwahl gewarnt und/oder welche Engstellen vermieden werden sollen. Dies wäre z.B. in Abhängigkeit von einer absoluten Breite der betreffenden Engstelle und/oder auch in Abhängigkeit von einer relativen Breite und/oder Länge der Engstelle möglich. Dabei kann zum Beispiel die Fahrzeugbreite ins Verhältnis zur Breite der Engstelle gesetzt und beurteilt werden. Auch kann z.B. die Fahrzeuglänge ins Verhältnis zur Länge der Engstelle gesetzt und beurteilt werden. Zum Beispiel wäre es denkbar, dass ein Fahrer eine relativ enge, dafür aber kurze Engstelle noch gewillt wäre zu durchfahren. Allerdings könnte dieser Fahrer ungewillt sein, eine andere Engstelle gleicher Breite jedoch wesentlich größerer Länge zu durchfahren, u.a. weil dies mit einer wesentlich längeren Konzentrationsphase verbunden wäre, was bei langen Engstellen zu Unsicherheiten beim Fahrer führen kann.

Sollte das Kraftfahrzeug 1 noch vor dem Passieren der Engstelle 7 oder bei dem Versuch die Engstelle 7 zu passieren, ein Wendemanöver durchführen und somit die Engstelle 7 nicht vollständig durchfahren, können das Wendemanöver betreffende Informationen mittels der Kommunikationseinrichtung 4 des Kraftfahrzeugs 1 ebenfalls an die Servereinrichtung 9 und/oder über eine Car-to-Car-Kommunikation an das weitere Kraftfahrzeug 10 sowie natürlich auch an weitere Kraftfahrzeuge übertragen werden. Anhand dieser Informationen können andere Verkehrsteilnehmer auf einfache Weise erkennen, dass es sich beispielsweise um eine besonders enge und somit schwer oder gar nicht durchfahrbare Engstelle 7 handelt.

Zudem ermittelt der Engstellenassistent 2 des Kraftfahrzeugs 1 anhand von bereitgestellten Kartendaten und/oder Schwarmdaten von anderen Verkehrsteilnehmern oder Infrastruktureinrichtungen, ob das Kraftfahrzeug 1 nach dem Durchfahren der Engstelle 7 seine Fahrt unter Berücksichtigung wenigstens eines vorgegebenen Kriteriums problemlos fortsetzen kann. Beispielsweise ist es denkbar, dass die Engstelle 7 als solche mittels des Kraftfahrzeugs 1 aufgrund seiner eigenen Abmessungen der Abmessung der Engstelle 7 relativ problemlos passiert werden kann. Jedoch ist es denkbar, dass beispielsweise hinter der Engstelle 7 eine Sackgasse endet, wobei keine Wendemöglichkeit oder nur sehr eingeschränkte Wendemöglichkeiten bestehen. In dem Fall kann der Fahrer des Kraftfahrzeugs 1 darüber in Kenntnis gesetzt werden, und zwar noch bevor er den Versuch unternimmt, die Engstelle 7 zu durchfahren. Beispielsweise ist es auch möglich, dass Informationen über eine Bereifung des Kraftfahrzeugs 1 und eine Fahrbahnbeschaffenheit hinter der Engstelle 7 berücksichtigt werden. Zum Beispiel ist es denkbar, dass hinter der Engstelle 7 ein Streckenabschnitt mit sehr tiefen Schlaglöchern oder auch beispielsweise eine Schotterpiste folgt. In letzterem Fall wäre es sehr ungünstig, wenn das Kraftfahrzeug 1 nicht die passende Bereifung aufgezogen hat. In dem Fall wird der Fahrer des Kraftfahrzeugs noch vor dem Versuch, die Engstelle 7 zu durchfahren, darüber in Kenntnis gesetzt, dass es zumindest als kritisch anzusehen ist, die Fahrt nach der Engstelle 7 fortzusetzen.

Zudem kann es auch vorgesehen sein, dass die Aktivierungseinrichtung 5 den Engstellenassistenten 2 erst dann aktiviert oder eine Aktivierung des Engstellenassistenten 2 überhaupt dann nur vorschlägt, wenn anhand von bereitgestellten Kartendaten und/oder Schwarmdaten von anderen Verkehrsteilnehmern oder Infrastruktureinrichtungen festgestellt wird, dass das Kraftfahrzeug 1 eine vorgegebene Entfernung zur Engstelle 7 unterschritten hat. Dadurch kann einerseits verhindert werden, dass der Fahrer des Kraftfahrzeugs 1 unnötig mit Informationen über bevorstehende Engstellen 7 überfrachtet wird. Andererseits kann sichergestellt werden, dass der Fahrer des Kraftfahrzeugs 1 aber immer rechtzeitig darüber informiert wird, wenn er sich einer Engstelle 7 nahe genug genähert hat.

Die Aktivierungseinrichtung 5 kann zudem auch die Aktivierung des Assistenzsystems 6 oder auch weiterer nicht dargestellter Assistenzsysteme, insbesondere Fahrerassistenzsysteme, des Kraftfahrzeugs 1 vorschlagen. Dabei können beispielsweise wiederum bereitgestellte Kartendaten und/oder Schwarmdaten von anderen Verkehrsteilnehmern oder Infrastruktureinrichtungen berücksichtigt werden. Die Aktivierungseinrichtung 5 kann insbesondere selbstlernend ausgebildet sein, um mit der Zeit fahrerspezifisch zu erkennen, welche Präferenzen er bezüglich welcher Assistenzsysteme bei welchen Randbedingungen hat. Nachdem die Aktivierungseinrichtung 5 beispielsweise die Aktivierung des Assistenzsystems 6 vorgeschlagen hat, wird das Assistenzsystem vorzugsweise erst dann aktiviert, wenn eine entsprechende Bestätigungshandlung des Fahrers des Kraftfahrzeugs 1 erfasst worden ist. Die Bestätigungshandlungen können beispielsweise durch Knopfdruck, sprachbasiert, gestenbasiert, blickrichtungsabhängig und dergleichen erfolgen. Dadurch, dass die Aktivierungseinrichtung 5 jeweilige Bestätigungshandlungen und zugehörige Daten hinsichtlich jeweiliger Fahrsituationen und/oder jeweiliger Fahrer auswertet, kann die Aktivierungseinrichtung 5 sukzessive jeweilige Präferenzen unterschiedlicher Fahrer erkennen und dafür nutzen, immer bessere und passendere Vorschläge zur Aktivierung oder gegebenenfalls auch zur Deaktivierung von bestimmten Assistenzsystemen des Kraftfahrzeugs 1 vorzuschlagen.

### Bezugszeichenliste

- 1: Kraftfahrzeug
- 2: Engstellenassistent
- 3: Sensor
- 4: Kommunikationseinrichtung
- 5: Aktivierungseinrichtung
- 6: Assistenzsystem
- 7: Engstelle
- 8: Hindernis
- 9: fahrzeugexterne Servereinrichtung
- 10: weiteres Kraftfahrzeug

## Patentansprüche

1. Verfahren zum Betreiben eines Kraftfahrzeugs (1), mit den Schritten
- Überprüfen mittels eines Engstellenassistenten (2) des Kraftfahrzeugs anhand von Abmessungen einer Engstelle (7) charakterisierenden Daten, ob zumindest eine Trajektorie zum kollisionsfreien Durchfahren der Engstelle (7) mit dem Kraftfahrzeug (1) ermittelbar ist;
- falls keine Trajektorie zum kollisionsfreien Durchfahren der Engstelle (7) ermittelbar ist: Ausgeben einer Warnmeldung;
- falls zumindest eine Trajektorie zum kollisionsfreien Durchfahren der Engstelle (7) ermittelt worden ist: Signalisieren, dass die Engstelle (7) passierbar ist;
wobei entsprechend der ermittelten Trajektorie ein Soll-Fahrschlauch mittels einer Anzeigeeinrichtung des Kraftfahrzeugs (1) angezeigt wird, wobei solange das Kraftfahrzeug (1) innerhalb des Soll-Fahrschlauchs fährt, die Engstelle (7) kollisionsfrei durchfahrbar ist,
**dadurch gekennzeichnet, dass**
der Engstellenassistent (2) anhand von bereitgestellten Kartendaten und/oder Schwarmdaten von anderen Kraftfahrzeugen (10) ermittelt, ob das Kraftfahrzeug (1) nach einem Durchfahren der Engstelle (7) seine Fahrt unter Berücksichtigung wenigstens eines vorgegebenen Kriteriums aus den folgenden Kriterien nach der Engstelle fortsetzen kann:
- Abmessungen des Kraftfahrzeugs (1) betreffend Bodenfreiheit und/oder Fahrzeughöhe,
- Bereifung des Kraftfahrzeugs (1) und/oder
- Fahrbahnbeschaffenheit,
und den Fahrer, noch vor dem Versuch des Fahrers, die Engstelle (7) zu durchfahren, darüber in Kenntnis setzt.

2. Verfahren nach Anspruch 1,
**dadurch gekennzeichnet, dass**
ein Lenkwinkel des Kraftfahrzeugs (1) erfasst und ein dem Lenkwinkel entsprechender Ist-Fahrschlauch mittels der Anzeigeeinrichtung angezeigt wird.

3. Verfahren nach Anspruch 1 oder 2,
**dadurch gekennzeichnet, dass**
mittels einer Kommunikationseinrichtung des Kraftfahrzeugs (1) die Engstelle (7) betreffende Daten an eine fahrzeugexterne Servereinrichtung (9) und/oder an zumindest ein weiteres Kraftfahrzeug (10) übertragen werden.

4. Verfahren nach Anspruch 3,
**dadurch gekennzeichnet, dass**
nach einem kollisionsfreien Durchfahren der Engstelle (7) zumindest eine der folgenden Informationen an die fahrzeugexterne Servereinrichtung (9) und/oder an das zumindest eine weitere Kraftfahrzeug (10) übertragen wird:
- eine Position der Engstelle (7),
- Abmessungen der Engstelle (7),
- Abmessungen des Kraftfahrzeugs (1),
- eine Geschwindigkeit des Kraftfahrzeugs (1) beim Durchfahren der Engstelle (7).

5. Verfahren nach Anspruch 3 oder 4,
**dadurch gekennzeichnet, dass**
falls das Kraftfahrzeug (1) vor der Engstelle (7) oder bei einem Versuch die Engstelle (7) zu durchfahren eine Wendemanöver durchgeführt und die Engstelle (7) nicht, insbesondere nicht vollständig, durchfahren hat, eine das Wendemanöver betreffende Information an die fahrzeugexterne Servereinrichtung (9) und/oder an das zumindest eine weitere Kraftfahrzeug (10) überträgt.

6. Verfahren nach einem der vorhergehenden Ansprüche,
**dadurch gekennzeichnet, dass**
mittels einer Aktvierungseinrichtung (5) der Engstellenassistent (2) erst dann aktiviert oder eine Aktivierung des Engstellenassistenten (2) vorgeschlagen wird, wenn anhand von bereitgestellten Kartendaten und/oder Schwarmdaten von anderen Kraftfahrzeugen (10) festgestellt wird, dass das Kraftfahrzeug (1) eine vorgegebene Entfernung zur Engstelle (7) unterschritten hat.

7. Verfahren nach Anspruch 6,
**dadurch gekennzeichnet, dass**
mittels der Aktvierungseinrichtung (5) eine Aktivierung wenigstens eines weiteren Assistenzsystems (6) des Kraftfahrzeugs (1), insbesondere eines weiteren Fahrerassistenzsystems, in Abhängigkeit von den bereitgestellten Kartendaten und/oder Schwarmdaten situationsabhängig vorgeschlagen wird, wobei das vorgeschlagene Assistenzsystem (6) aktiviert wird, sobald eine vorgegebene Bestätigungshandlung erfasst worden ist.

8. Verfahren nach Anspruch 7,
**dadurch gekennzeichnet, dass**
die Aktvierungseinrichtung (5) jeweilige Bestätigungshandlungen und zugehörige Daten hinsichtlich jeweiliger Fahrsituationen und/oder jeweiliger Fahrer auswertet und basierend darauf die Aktivierung, insbesondere fahrerspezifisch, vorschlägt.

9. Kraftfahrzeug (1) mit einem Engstellenassistenten (2) , welches dazu eingerichtet ist, ein Verfahren nach einem der vorhergehenden Ansprüche durchzuführen.

## Claims

1. Method for operating a motor vehicle (1), comprising the following steps:
- checking, by way of a narrow section assistant (2) of the motor vehicle, based on data characterizing dimensions of a narrow section (7), whether it is possible to determine at least one trajectory for the motor vehicle (1) to drive through the narrow section (7) without a collision;
- if it is not possible to determine a trajectory to drive through the narrow section (7) without a collision: outputting a warning notification;
- if at least one trajectory to drive through the narrow section (7) without a collision has been determined: signalling that the narrow section (7) is passable;
wherein, in accordance with the determined trajectory, a target driving tube is displayed by way of a display device of the motor vehicle (1), wherein, as long as the motor vehicle (1) drives within the target driving tube, the narrow section (7) is able to be driven through without a collision,
**characterized in that**
the narrow section assistant (2) determines, on the basis of provided map data and/or swarm data from other motor vehicles (10), whether the motor vehicle (1), after having driven through the narrow section (7), is able to continue its journey taking into consideration at least one predefined criterion from the following criteria following the narrow section:
- dimensions of the motor vehicle (1) in relation to ground clearance and/or vehicle height,
- the tyres of the motor vehicle (1) and/or
- road conditions,
and to make the driver aware thereof even before the driver attempts to drive through the narrow section (7).

2. Method according to Claim 1,
**characterized in that**
a steering angle of the motor vehicle (1) is detected and an actual driving tube corresponding to the steering angle is displayed by way of the display device.

3. Method according to Claim 1 or 2,
**characterized in that**
data relating to the narrow section (7) are transmitted to a server device (9) external to the vehicle and/or to at least one further motor vehicle (10) by way of a communication device of the motor vehicle (1).

4. Method according to Claim 3,
**characterized in that**
after the narrow section (7) has been driven through without a collision, at least one of the following items of information is transmitted to the server device (9) external to the vehicle and/or to the at least one further motor vehicle (10):
- a position of the narrow section (7),
- dimensions of the narrow section (7),
- dimensions of the motor vehicle (1),
- a speed of the motor vehicle (1) when driving through the narrow section (7).

5. Method according to Claim 3 or 4,
**characterized in that**
if the motor vehicle (1) performs a turning manoeuvre prior to the narrow section (7) or during an attempt to drive through the narrow section (7) and has not, in particular not completely, driven through the narrow section (7), an item of information relating to the turning manoeuvre is transmitted to the server device (9) external to the vehicle and/or to the at least one further motor vehicle (10).

6. Method according to one of the preceding claims,
**characterized in that**
the narrow section assistant (2) is activated by way of an activation device (5) or activation of the narrow section assistant (2) is suggested only when it is identified, on the basis of provided map data and/or swarm data from other motor vehicles (10), that the motor vehicle (1) has fallen below a predefined distance from the narrow section (7).

7. Method according to Claim 6,
**characterized in that**
activation of at least one further assistance system (6) of the motor vehicle (1), in particular of a further driver assistance system, is suggested by way of the activation device (5) on the basis of the provided map data and/or swarm data in a situation-dependent manner, wherein the suggested assistance system (6) is activated as soon as a predefined actuation operation has been detected.

8. Method according to Claim 7,
**characterized in that**
the activation device (5) evaluates respective actuation operations and associated data with regard to respective driving situations and/or respective drivers and suggests the actuation, in particular in a driver-specific manner, based thereon.

9. Motor vehicle (1) having a narrow section assistant (2) that is configured to perform a method according to one of the preceding claims.

## Revendications

1. Procédé permettant de faire fonctionner un véhicule automobile (1), comprenant les étapes consistant à
- vérifier au moyen d'un assistant pour passages étroits (2) du véhicule automobile à l'aide de données caractérisant les dimensions d'un passage étroit (7) si au moins une trajectoire pour le franchissement sans collision du passage étroit (7) avec le véhicule automobile (1) peut être déterminée ;
- si aucune trajectoire pour le franchissement sans collision du passage étroit (7) ne peut être déterminée : émettre un message d'avertissement ;
- si au moins une trajectoire pour le franchissement sans collision du passage étroit (7) a été déterminée : signaler que le passage étroit (7) peut être passé ;
dans lequel, selon la trajectoire déterminée, un couloir de conduite de consigne est affiché au moyen d'un dispositif d'affichage du véhicule automobile (1), dans lequel, tant que le véhicule automobile (1) se déplace à l'intérieur du couloir de conduite de consigne, le passage étroit (7) peut être franchi sans collision,
**caractérisé en ce que** l'assistant pour passages étroits (2) détermine à l'aide de données cartographiques fournies et/ou de données collectives provenant d'autres véhicules automobiles (10) si après le passage étroit le véhicule automobile (1) peut poursuivre son déplacement après avoir franchi le passage étroit (7) en tenant compte d'au moins un critère prédéfini parmi les critères suivants :
- les dimensions du véhicule automobile (1) concernant la garde au sol et/ou la hauteur de véhicule,
- les pneumatiques du véhicule automobile (1), et/ou
- la nature de la voie de circulation,
et en informe le conducteur avant même que le conducteur ne tente de franchir le passage étroit (7).

2. Procédé selon la revendication 1, **caractérisé en ce qu'**un angle de braquage du véhicule automobile (1) est détecté et un couloir de conduite réel correspondant à l'angle de braquage est affiché au moyen du dispositif d'affichage.

3. Procédé selon la revendication 1 ou 2, **caractérisé en ce qu'**au moyen d'un dispositif de communication du véhicule automobile (1), des données concernant le passage étroit (7) sont transmises à un dispositif serveur (9) externe au véhicule et/ou à au moins un autre véhicule automobile (10).

4. Procédé selon la revendication 3, **caractérisé en ce qu'**après un franchissement sans collision du passage étroit (7), au moins l'une des informations suivantes est transmise au dispositif serveur (9) externe au véhicule et/ou audit au moins un autre véhicule automobile (10) :
- une position du passage étroit (7),
- les dimensions du passage étroit (7),
- les dimensions du véhicule automobile (1),
- une vitesse du véhicule automobile (1) lors du franchissement du passage étroit (7).

5. Procédé selon la revendication 3 ou 4, **caractérisé en ce que** si avant le passage étroit (7) ou au moment d'une tentative de franchir le passage étroit (7), le véhicule automobile (1) a effectué un demi-tour et n'a pas, en particulier pas complètement, franchi le passage étroit (7), il transmet une information concernant le demi-tour au dispositif serveur (9) externe au véhicule et/ou audit au moins un autre véhicule automobile (10).

6. Procédé selon l'une quelconque des revendications précédentes, **caractérisé en ce qu'**un dispositif d'activation (5) n'active l'assistant pour passages étroits (2) ou ne propose une activation de l'assistant pour passages étroits (2) que s'il est constaté à l'aide de données cartographiques fournies et/ou de données collectives provenant d'autres véhicules automobiles (10) que le véhicule (1) a soupassé une distance prédéfinie jusqu'au passage étroit (7).

7. Procédé selon la revendication 6, **caractérisé en ce que** le dispositif d'activation (5) propose une activation d'au moins un autre système d'assistance (6) du véhicule automobile (1), en particulier d'un autre système d'assistance au conducteur, en fonction des données cartographiques fournies et/ou des données collectives en fonction de la situation, dans lequel le système d'assistance (6) proposé est activé dès qu'une action de confirmation spécifiée a été détectée.

8. Procédé selon la revendication 7, **caractérisé en ce que** le dispositif d'activation (5) évalue des actions de confirmation respectives et des données associées en vue de situations de conduite respectives et/ou de conducteurs respectifs, et propose sur cette base l'activation, en particulier de manière spécifique au conducteur.

9. Véhicule automobile (1) comprenant un assistant pour passages étroits (2) qui est conçu pour exécuter un procédé selon l'une quelconque des revendications précédentes.
